(19) **Europäisches Patentamt / European Patent Office / Office européen des brevets**

(11) **EP 1 976 166 A1**

(12) **EUROPEAN PATENT APPLICATION**
published in accordance with Art. 158(3) EPC

(43) Date of publication:
**01.10.2008 Bulletin 2008/40**

(51) Int Cl.:
**H04J 11/00** *(2006.01)*

(21) Application number: **06791006.7**

(22) Date of filing: **15.09.2006**

(86) International application number:
**PCT/CN2006/002408**

(87) International publication number:
**WO 2007/085151 (02.08.2007 Gazette 2007/31)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **25.01.2006 CN 200610001757**

(71) Applicant: **Huawei Technologies Co., Ltd.**
**Longgang District, Shenzhen**
**Guangdong 518129 (CN)**

(72) Inventor: **ZHENG, Ruobin**
**Shenzhen, Guangdong 518129 (CN)**

(74) Representative: **Thun, Clemens**
**Mitscherlich & Partner**
**Sonnenstrasse 33**
**80331 München (DE)**

(54) **AN ERROR CONTROL METHOD AND AN INTERDEPENDENT RELAY SYSTEM**

(57) An error control method and a cooperative transfer system are provided. The method comprises: each node acting as a transfer node in a cooperative node group codes an acquired distributed information code block to obtain a corresponding distributed check code block and transmits the corresponding distributed check code block to a destination node; the destination node combines a received distributed check code block to generate a check code block and combines the distributed information code block transmitted by each node acting as a source node in the cooperative node group to generate an information code block; and the destination node decodes the check code block and the information code block. The embodiment of the present invention may perform an XOR operation to the information code block transmitted by each node in the cooperative node group during a linear block coding, so that the information code block of different user stations can be transmitted to a base station in the same frequency band and the same period of time. Therefore, the throughput of the transfer system is increased farthest, and additional cooperative path diversity and linear block code gain are obtained.

Each node acting as the source node in the cooperative node group transmits the distributed information code block to each node acting as the transfer node in the cooperative node group and the destination node — 101

After each transfer node in the cooperative node group receives the distributed information code block transmitted by each source node in the group, combines it with the distributed information code block which is transmitted to itself, processes the distributed linear block encoding, obtains corresponding distributed check code block and transmits it to the destination node — 102

The destination node combines the received distributed check code block transmitted by each transfer node, and combines the distributed information code block transmitted by each source node during broadcasting stage, then forms a linear block code block based on the combined check code block and information code block, finally, the destination node decodes the linear block code block based on the monitor matrix corresponding to the cooperative transfer node group composed of each relay node — 103

**FIG. 11**

**Description**

FIELD OF THE TECHNOLOGY

The present invention relates to the communication field, and more particularly to an error control technology.

BACKGROUND

Since there are always noises on the communication lines, a combination of the noises with the useful information may result in errors of transferred information. In order to provide source codes with error detection and error correction capabilities, many redundancy code elements (or called monitor code elements) shall be added according to a certain rule based on source coding, so as to establish a certain relation between the redundancy code elements and transferred information code elements. The above task accomplished by a transmitting end is called an error-control coding. At a receiving end, the error detection or error correction is accomplished according to a specific relation between the information code elements and the monitor code elements so as to output original information code elements. The above task is called an error control decoding.

According to an inspection relation between the information code elements and the additional monitor code elements, the error-control coding may be classified into a linear code and a non-linear code. The linear code indicates that the inspection relation between the information code elements and the additional monitor code elements is linear, that is, satisfying a set of linear equations. According to different restriction manners between the information code elements and the additional monitor code elements, the error-control coding may be classified into a block code and a convolutional code. The block code is realized by a block encoder which is a memoryless device. The block coding may be marked by (n , k), that is, k bits of information code elements are taken as a block, which are coded into a code block with a length of n bits code elements, and the length of (n-k) is the length of the monitor code elements. Each block of monitor code elements is relevant only to the information code elements in the same block and is irrelevant to the information code elements in other blocks. A coding rate is k/n.

The error control in the coding and decoding processes is illustrated below by taking a linear packet code block (7, 3) as an example:

Assume that an information code block input by the transmitting end is:

$$U = \begin{bmatrix} u_0 & u_1 & u_2 \end{bmatrix}.$$

An output linear block information code block is:

$$C = \begin{bmatrix} c_0 & c_1 & c_2 & c_3 & c_4 & c_5 & c_6 \end{bmatrix}.$$

An output check code block is: $P = [p_0 \ p_1 \ p_2 \ p_3] = [c_3 \ c_4 \ c_5 \ c_6]$.

Linear equations for performing the error-control coding are:

$$\begin{cases} Infomation \\ CodeElement = \begin{cases} c_0 = u_0 \\ c_1 = u_1 \\ c_2 = u_2 \end{cases} \\ Monitor \\ CodeElemnt = \begin{cases} c_3 = u_0 \oplus u_2 \\ c_4 = u_0 \oplus u_1 \oplus u_2 \\ c_5 = u_0 \oplus u_1 \\ c_6 = u_1 \oplus u_2 \end{cases} \end{cases} \quad (1)$$

The above Equations (1) may be rewritten as: $C = U \cdot G$.

G indicates a k×n generating matrix composed of two parts: $G = \begin{bmatrix} M & \vdots & Q \end{bmatrix}$, in which M indicates an information code element matrix in the generated matrix G and Q indicates a check code element matrix k×(n-k) in the generated matrix G.

In this example,

$$G = \begin{bmatrix} 1 & 0 & 0 & \vdots & 1 & 1 & 1 & 0 \\ 0 & 1 & 0 & \vdots & 0 & 1 & 1 & 1 \\ 0 & 0 & 1 & \vdots & 1 & 1 & 0 & 1 \end{bmatrix}.$$

It can be seen that M is a unit matrix 3×3. In this case, during coding, G can be generated by combining the obtained M with a check code matrix Q, and a point multiplication is performed between the G and the input original information code block U and then an XOR operation is performed there-between so as to obtain the linear block information code block C.

During decoding, a monitor code element matrix H corresponding to the original information code block shall be obtained in advance, and it is judged whether an error occurs to the obtained original information code block or not through determining whether the equation $H \cdot C^T = 0^T$ is satisfied between the linear block information code block C and the monitor code element matrix H or not. If the equation $H \cdot C^T = 0^T$ is satisfied between the linear block information code block C and the monitor code element matrix H, it indicates that no error occurs; and if the equation $H \cdot C^T = 0^T$ is not satisfied between the linear block information code block C and the monitor code element matrix H, the transmitting end is informed to retransmit the information code block or perform an error correction directly.

The monitor code element matrix H is composed of two parts: $H = \begin{bmatrix} S & \vdots & R \end{bmatrix}$, in which S indicates a system code element partial matrix in the monitor matrix and R indicates a check code element partial matrix in the monitor matrix.

In this example,

$$H = \begin{bmatrix} 1 & 0 & 1 & \vdots & 1 & 0 & 0 & 0 \\ 1 & 1 & 1 & \vdots & 0 & 1 & 0 & 0 \\ 1 & 1 & 0 & \vdots & 0 & 0 & 1 & 0 \\ 1 & 1 & 1 & \vdots & 0 & 0 & 0 & 1 \end{bmatrix}.$$

It can be seen that R is a unit matrix 4×4. In this case, when the receiving end performs decoding, it merely needs to form the monitor matrix H according to the system code element partial matrix S and it is judged whether the error occurs to the original information code block or not through determining whether the equation $H \cdot C^T = 0^T$ is satisfied between the linear block information code block C and the monitor code element matrix H or not.

In the prior art relevant to the present invention, the channel coding and decoding are realized by utilizing an orthogonal frequency division multiplexing (OFDM) technology.

Figure 1 shows an OFDM transfer system. In Figure 1, the transfer system includes a user station (such as a user station 1 or a user station 2), an OFDM transfer station and a base station.

Figure 2 shows the structure of the OFDM transfer station, which includes an OFDM receiver and an OFDM transmitter. The working principle of the OFDM receiver is shown in Figure 3, the working principle of the OFDM transmitter is shown in Figure 4, and the working principle of the base station is shown in Figure 5.

The user station 1 and the user station 2 respectively transmit the original information code blocks U1 and U2 to the base station and a transfer station after performing a channel coding, a symbol mapping and an OFDM modulation on the original information code blocks U1 and U2. Upon receiving the signal transmitted from the user stations, the transfer station sequentially performs the OFDM demodulation, the symbol demapping and the channel decoding on the signal so as to obtain the original information code blocks U1 and U2. The transfer station then performs the channel coding, the symbol mapping and the OFDM modulation on the original information code blocks U1 and U2 and transfers them to the base station.

Upon receiving the signal transmitted from the transfer station, the base station respectively performs the OFDM demodulation, the symbol demapping and the channel decoding on the signal so as to obtain the original information code blocks.

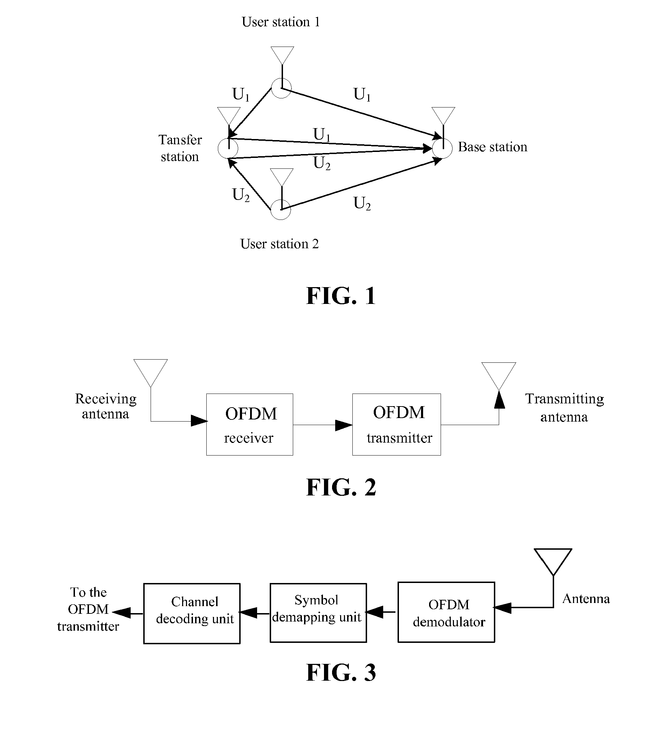

As for the transfer technology in the prior art shown in Figure 1, the path from the user station to the base station and the path from the user station to the base station via the transfer station constitute a path diversity, which enhances the reliability of information transmission. However, only the following two technologies are generally adopted for transmitting the information code block U1 of the user station 1 to the base station via the transfer station and transmitting the information code block U2 of the user station 2 to the base station via the transfer station.

The first technology is that the information code block U1 and the information code block U2 from the transfer station to the base station respectively occupy different frequency bands.

The second technology is that the information code block U1 and the information code block U2 from the transfer station to the base station use the same frequency band, but occupy different time periods.

When the first technology is utilized, there are defects as following:

A wide spectrum is required. However, the spectrum is a rare resource for operators, so it is intolerable for the operators to waste the spectrum resource to a great extent.

When the second technology is utilized, although it requires fewer spectrums, each transfer station must be worked in a time-sharing manner, which reduces an average data communication rate of each transfer station. As a result, a throughput of a source node is increased to a rather limited extent or may be even reduced.

SUMMARY

The object of the embodiment of the present invention is to provide an error control method and a cooperative transfer system, which can not only meet a wide spectrum requirement when the transfer station occupies different frequency bands to transmit information code blocks of different user stations to the base station, but also solve the problem of a limited increase or even a decrease of the throughput of the source node when the transfer station uses the same frequency band but occupies different periods of time to transmit the information code blocks of different user stations to the base station, increase the throughput of the transfer system to the utmost extent and further obtain additional cooperative path diversity and linear block code gain.

The object of the embodiment of the present invention is realized by the following technical solutions:

An embodiment of the present invention provides an error control method, which includes:

Each node acting as a transfer node in a cooperative node group codes an acquired distributed information code block to obtain a corresponding distributed check code block and transmits the corresponding distributed check code block to a destination node.

The destination node combines a received distributed check code block to generate a check code block and combines the distributed information code block transmitted by each node acting as a source node in the cooperative node group to generate an information code block.

The destination node decoding the check code block and the information code block. The destination node decodes the check code block and the information code block.

The following technical solutions of the method are optional.

The coding to obtain the corresponding distributed check code block and transmitting it to the destination node includes the following steps.

Each node acting as the transfer node in the cooperative node group acquires the distributed information code block transmitted by each node acting as the source node in the cooperative node group; acquires the distributed information code block transmitted by each node acting as a source node in the cooperative node group, and the distributed information code block of each node acting as the transfer node in the cooperative node group.

Each node acting as the transfer node in the cooperative node group combines the acquired distributed information code block, performs a corresponding distributed linear block encoding on the obtained combined information code block after the combination to obtain the corresponding check code block and transmits the corresponding distributed check code block to the destination node; or performs a corresponding distributed linear block encoding on the obtained information code block after the combination to obtain a check code block corresponding to a whole group composed of each source node, acquires the distributed check code block corresponding to each node acting as the transfer node in the cooperative node group and transmitting the distributed check code block to the destination node.

Before the coding to obtain the corresponding distributed check code block and transmitting the corresponding distributed check code block to the destination node, the method further includes the following steps:

Each node acting as the source node in the cooperative node group transmits the distributed information code block to each node acting as the transfer node in the cooperative node group and the destination node.

The transmitting the distributed information code block includes the following steps:

When an OFDM subchannel technology is employed, according to different OFDM sub-carrier clusters, an OFDM subchannel is assigned to a broadcast channel from the node acting as the source node in the cooperative node group to a cooperative transfer node group composed of each node acting as the transfer node, and the destination node; each node acting as the source node in the cooperative node group broadcasts the distributed information code block to each node acting as the transfer node and the destination node through different OFDM subchannels.

When a time division technology is employed, according to different timeslots, a time division subchannel is assigned to a broadcast channel from the node acting as the source node in the cooperative node group to a cooperative transfer node group composed of each node acting as the transfer node in the cooperative node group, and the destination node; each node acting as the source node in the cooperative node group broadcasts the distributed information code block to each node acting as the transfer node and the destination node through different time division subchannels.

When a code division technology is employed, a spread spectrum code is assigned to a broadcast channel from the node acting as the source node in the cooperative node group to a cooperative transfer node group composed of each node acting as the transfer node in the cooperative node group, and the destination node, according to different spreading codes; each node acting as the source node in the cooperative node group broadcasts the distributed information code block to each node acting as the transfer node and the destination node through the different spread spectrum codes.

Before the coding to obtain the corresponding distributed check code block and transmitting the corresponding distributed check code block to the destination node, the method further includes the following steps:

The OFDM subchannel is assigned to a transfer channel from each node acting as the transfer node in the cooperative node group to the destination node according to different OFDM sub-carrier clusters.

A time division subchannel is assigned the to a transfer channel from each node acting as the transfer node in the cooperative node group to the destination node.

A spread spectrum code is assigned to a transfer channel from each node acting as the transfer node in the cooperative node group to the destination node.

The method further includes: acquiring, by the destination node, a monitor matrix corresponding to the cooperative transfer node group composed of each node acting as the transfer node in the cooperative node group.

When it is required to support dynamic self-adaptive linear block coding, the method further includes the following steps:

Each node acting as the transfer node in the cooperative node group transmits a distributed monitor matrix, corresponding to each node acting as the transfer node in the cooperative node group, to the destination node; the destination node combines each received distributed monitor matrix to acquire the monitor matrix corresponding to the cooperative transfer node group composed of each node acting as the transfer node.

When a check code element partial matrix in the monitor matrix corresponding to the cooperative transfer node group composed of each node acting as a transfer node in the cooperative node group is a unit matrix, each node acting as the transfer node in the cooperative node group transmits a distributed system code element partial matrix corresponding to each node acting as the transfer node in the cooperative node group to the destination node; the destination node combines the distributed system code element partial matrix and constructs the monitor matrix corresponding to the cooperative transfer node group according to an obtained system code element partial matrix after the combination.

The decoding performed by the destination node includes the following steps:

The destination node combines the received distributed check code block transmitted by each node acting as the transfer node, combines the distributed information code block transmitted by each node acting as the source node in the cooperative node group, and forms a linear packet code block according to the obtained check code block and information code block after the combination.

The linear packet code block is decoded according to the monitor matrix corresponding to the cooperative transfer node group composed of each node acting as the transfer node.

The embodiment of the present invention further provides a cooperative transfer system for error control, which includes a cooperative node group and a destination node.

The cooperative node group is adapted to code a distributed information code block acquired by each code acting as a transfer node in the cooperative node group to obtain a corresponding distributed check code block, and transmit the corresponding distributed check code block to the destination node. The destination node is adapted to combine the received distributed check code block, combine the distributed information code block transmitted by each node acting as a source node in the cooperative node group, and decode a generated check code block and a generated information code block after the combination.

The following technical solutions of the system are optional:

The transfer node in the cooperative node group includes a receiver and a transmitter.

The receiver is adapted to perform a channel decoding process on the received distributed information code block transmitted by each source node after successively performing a demodulating process and a symbol demapping process on the received distributed information code block, and transmit a processed distributed information code block to the transmitter

The transmitter is adapted to acquire the distributed information code block transmitted by the source node, or acquire the distributed information code block transmitted by the source node and the distributed information code block of the transmitter, perform a distributed linear block coding process after combining the obtained distributed information code block, and send out a processed distributed check code block after successively performing the symbol mapping process and a modulating process on an obtained corresponding distributed check code block; or perform a linear block coding process on an obtained information code block after the combination to obtain the corresponding check code block, and send out a processed distributed check code block after successively performing the corresponding symbol mapping process and the modulating process on the distributed check code block corresponding to the transmitter.

The receiver includes a demodulator, a symbol demapping unit and a channel decoding unit.

The demodulator is adapted to demodulate the received distributed information code block and transmit the demodulated distributed information code block to the symbol demapping unit. The symbol demapping unit is adapted to perform the symbol demapping process on the received distributed information code block and transmit a demapped distributed information code block to the channel decoding unit to perform the channel decoding process.

The transmitter includes a distributed linear block coding unit or a linear block coding unit.

The distributed linear block coding unit is adapted to combine the received distributed information code block transmitted by each source node, or combine the received distributed information code block transmitted by each source node with the distributed information code block of the transmitter, perform a distributed linear block coding process on the obtained information code block after the combination to obtain the corresponding distributed check code block, and send out the distributed check code block.

The linear block coding unit is adapted to combine the received distributed information code block transmitted by each source node, or combine the received distributed information code block transmitted by each source node with the distributed information code block of the transmitter, perform a distributed linear block coding process on the obtained information code block after the combination to obtain the corresponding check code block, and send out the distributed check code block corresponding to the transmitter.

The transmitter further includes a symbol mapping unit and a modulator.

The symbol mapping unit is adapted to perform the corresponding symbol mapping process on the distributed check code block transmitted by the distributed linear block coding unit or the linear block coding unit, transmit a mapped distributed check code block to the modulator, and send out after a corresponding modulating process.

The destination node includes a broadcast channel decoding unit and a transfer channel decoding unit.

The broadcast channel decoding unit is adapted to perform a channel decoding process on the distributed information code block broadcasted by each cooperative node and received by the destination node at the broadcasting stage, combine the decoded distributed information code block, output an estimated value of the information code block, and transmit the estimated value of the information code block to the transfer channel decoding unit.

The transfer channel decoding unit is adapted to combine the distributed check code block transmitted by each transfer node in the cooperative node group and received by the destination node at the transferring stage, and decode an obtained check code block after the combination and the estimated value of the received information code block.

The destination node further includes a demodulator and a symbol demapping unit.

The demodulator is adapted to demodulate the distributed information code block broadcasted by each node in the cooperative node group and received by the destination node at the broadcasting stage and/or the distributed check code block transmitted by each transfer node in the cooperative node group and received by the destination node at the transferring stage; and the symbol demapping unit is adapted perform the corresponding symbol demapping process on the processed distributed information code block and/or distributed check code block, transmit the distributed information code element to the broadcast channel decoding unit and transmit the distributed check code element to the transfer channel decoding unit.

The demodulator includes an OFDM demodulator, and the modulator includes an OFDM modulator.

It can be known from the technical solutions of the embodiment of the present invention that, in the embodiment of the present invention, each node acting as the transfer node in the cooperative node group codes the obtained distributed information code block to obtain the corresponding distributed check code block and transmits it to the destination node. The destination node combines the received distributed check code blocks and combines the distributed information code block transmitted by each node acting as the source node in the cooperative node group and decodes the combined check code block and information code block. The invention enables the XOR operation on the information code block transmitted by each node in the cooperative node group during the linear block coding, so that the information code blocks of the different user stations can be transmitted to the base station in the same frequency band and the same period of time. Therefore, the embodiment of the present invention can meet the wide spectrum requirement when the transfer station occupies different frequency bands to transmit information code blocks of different user stations, solve the problem of the limited increase or even the decrease of the throughput of the source node when the transfer station uses the same frequency band but occupies different periods of time to transmit information code blocks of different user stations to the base station, increase the throughput of the transfer system farthest, and further obtain additional cooperative path diversity and linear block code gain.

BRIEF DESCRIPTION OF THE DRAWINGS

Figure 1 is a working principle diagram illustrating the OFDM transfer system in the prior art;

Figure 2 is a schematic diagram illustrating the structure of the OFDM transfer station in the prior art;

Figure 3 is a working principle diagram illustrating the receiver in the OFDM transfer station in the prior art;

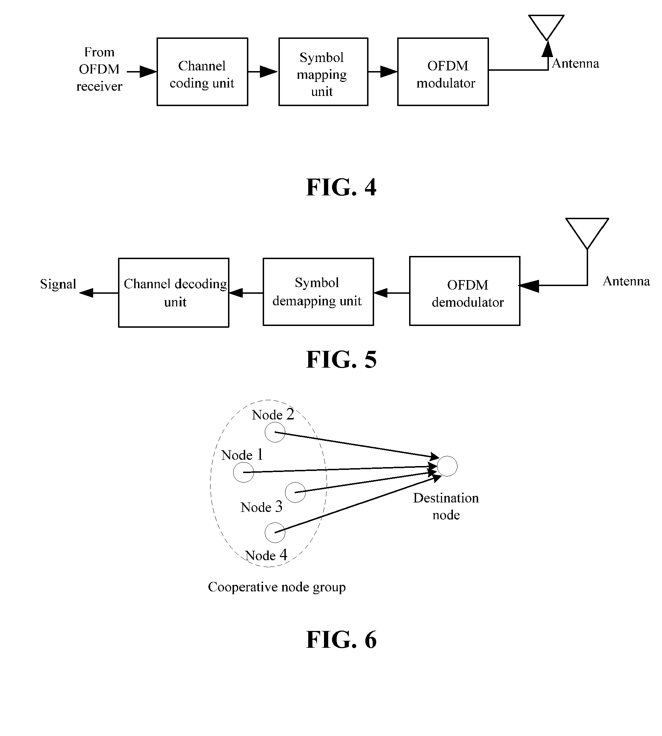

Figure 4 is a working principle diagram illustrating the transmitter in the OFDM transfer station in the prior art;

Figure 5 is a schematic working principle diagram illustrating the base station in the prior art;

Figure 6 is a schematic diagram illustrating a cooperative transfer system model in accordance with a first embodiment of the present invention;

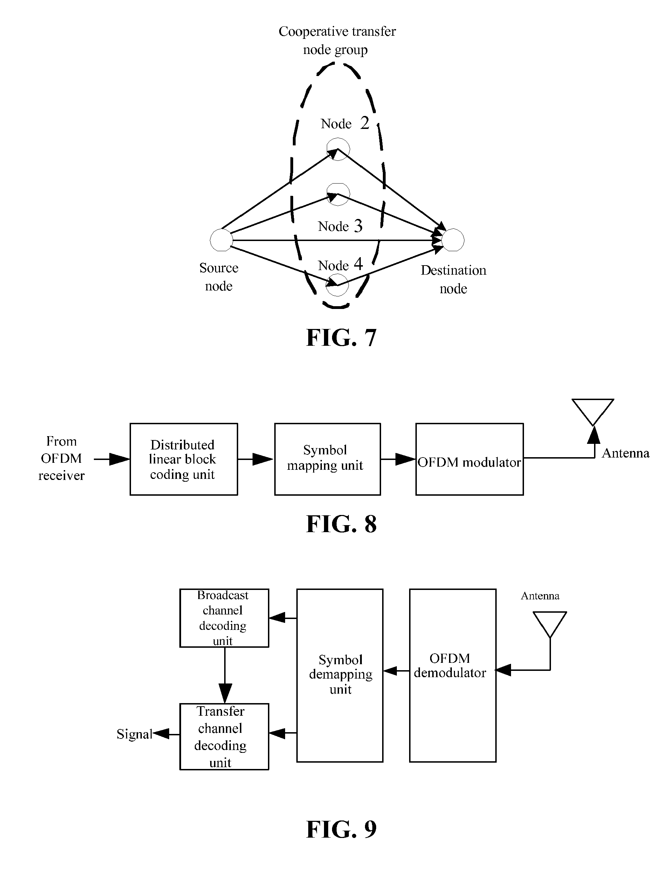

Figure 7 is a schematic diagram illustrating a second cooperative transfer system model in accordance with a first embodiment of the present invention;

Figure 8 is a schematic working principle diagram illustrating the transmitter in accordance with a first embodiment the present invention;

Figure 9 is a schematic working principle diagram illustrating the destination node in accordance with a first embodiment the present invention;

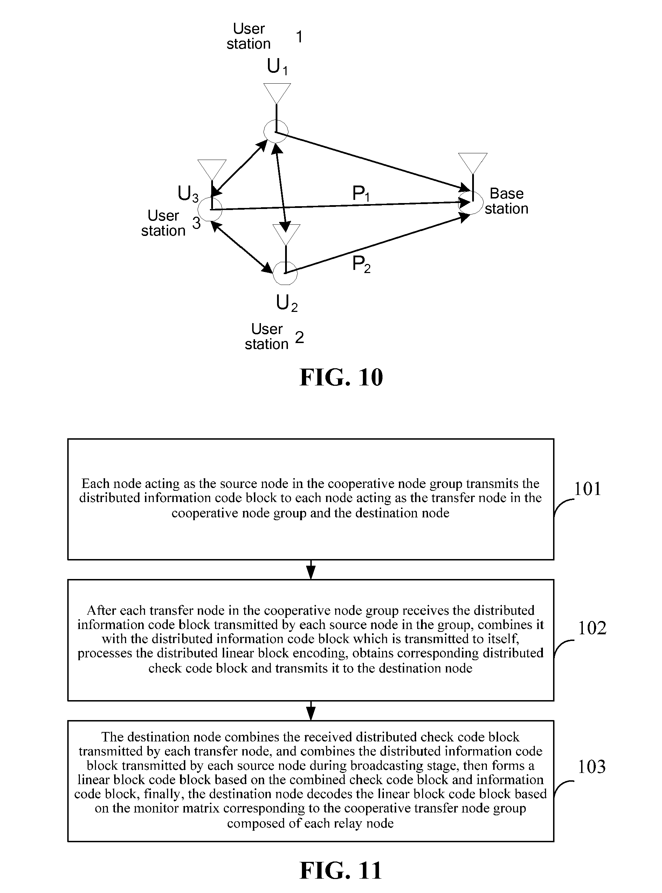

Figure 10 is a schematic diagram illustrating an implementation model in a cooperative transfer system in accordance with a first embodiment of the present invention;

Figure 11 is a flow chart illustrating a third embodiment of the present invention;

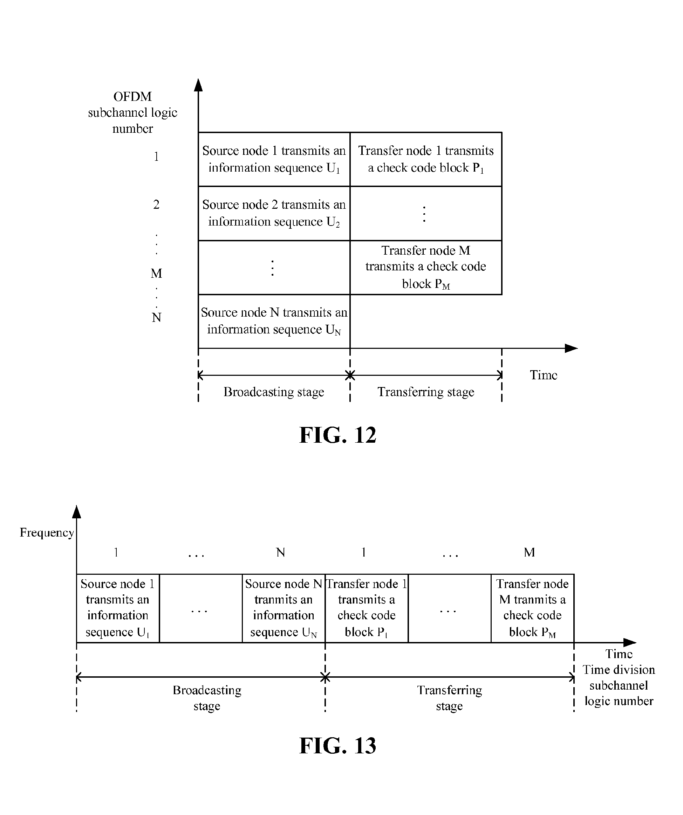

Figure 12 is a schematic diagram illustrating each node in the cooperative node group transmitting information to the destination node by using an OFDM technology;

Figure 13 is a schematic diagram illustrating each node in the cooperative node group transmitting the information to the destination node by using a time division technology; and

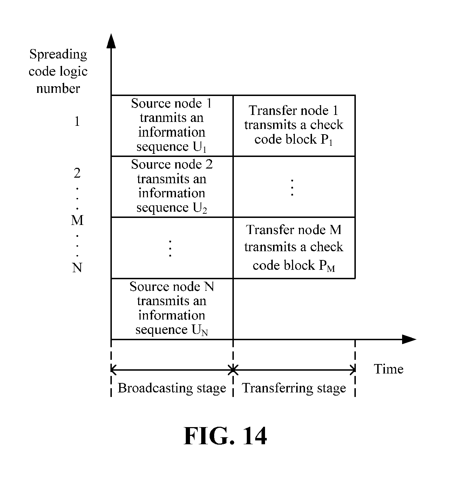

Figure 14 is a schematic view illustrating each node in the cooperative node group transmitting the information to the destination node by using a code division technology.

DETAILED DESCRIPTION

An embodiment of the present invention provides an error control method and a cooperative transfer system, which utilizes a distributed linear block code technology to support a cooperative access of each node in the cooperative transfer node group to the same base station.

Figure 6 shows a system in accordance with a first embodiment of the present invention, and the system includes the cooperative node group and the destination node. A communication target of the cooperative node group is the destination node. Each node in the cooperative node group, such as a node 1, a node 2, ..., and a node N, may act as an information source node (referred to as the source node for short), all the other nodes may act as the transfer node or a part of them may act as the transfer node. Therefore, the nodes which act as the transfer node may be the node 2, ..., and the node M, and M≤N. All the transfer nodes compose the cooperative transfer node group.

Assume that the node 1 acts as the source node; the system model shown in Figure 7 is formed. Each node in a dashed frame is the transfer node which composes the cooperative transfer node group. In addition to a direct communication channel, a plurality of transfer nodes act as communication channels for parallel cooperative transfer between the source node and the destination node.

Each source node broadcasts the distributed information code block to each transfer node.

Each transfer node has a similar structure as the structure shown in Figure 2, which includes the receiver, the transmitter and a transceiver antenna. The transceiver antenna may be one or more.

The receiver successively processes the received distributed information code block and transmits it to the transmitter. The transmitter processes the received distributed information code block and sends it out.

The receiver has a similar structure as the structure shown in Figure 3, which includes the demodulator, the symbol demapping unit and the channel decoding unit.

The demodulator is an OFDM demodulator, which demodulates the received information code block and transmits the demodulated information code block to the symbol demapping unit. The symbol demapping unit performs the symbol demapping process on the received information code block and transmits processed signal to the channel decoding unit. The channel decoding unit is a normal channel decoding unit adapted to perform the channel decoding process at the transferring stage.

The structure of the transmitter is shown in Figure 8, which includes the distributed linear block coding unit, the symbol mapping unit and the modulator. The modulator is the OFDM modulator.

The distributed linear block coding unit is a critical inventive feature of the embodiment of the present invention, which is adapted to combine the received distributed information code block transmitted by each source node, perform the distributed linear block coding process on the combined information code block to obtain the corresponding distributed check code block, and send out the distributed check code block.

When the transfer node in the cooperative node group is used as both the source node and the transfer node, the working principle of the distributed linear block coding unit in the transfer node is given as follows:

The distributed linear block coding unit combines the received distributed information code block transmitted by each source node with the distributed information code block of the distributed linear block coding unit, performs the distributed linear block coding process on the combined information code block to obtain the corresponding distributed check code block and sends out the distributed check code block.

The symbol mapping unit performs the symbol mapping process on the distributed check code block transmitted by the distributed block coding unit, transmits it to the modulator for a corresponding modulating process, and sends it out.

The structure of the destination node receiver is shown in Figure 9, which includes the demodulator, the symbol demapping unit, the broadcast channel decoding unit and the transfer channel decoding unit. The demodulator is the OFDM demodulator.

When the broadcast channel decoding unit is at the running status, i.e., at a broadcasting stage, the demodulator demodulates the distributed information code block broadcasted by each source node and received by the destination node, and transmits the processed distributed information code block to the symbol demapping unit. The symbol demapping unit merely performs the symbol demapping process on the distributed information code block output to the broadcast channel decoding unit, and then transmits it to the broadcast channel decoding unit.

The broadcast channel decoding unit decodes the processed distributed information code block after receiving it, combines the received distributed information code block with the distributed information code block of the broadcast channel decoding unit, performs the channel decoding process on the combined information code block, outputs the estimated value of the information code block, and transmits it to the transfer channel decoding unit.

When the transfer channel decoding unit is at the running status, i.e., at the transferring stage, the demodulator demodulates the distributed check code block transmitted by each transfer node and received by the destination node, transmits the processed distributed check code block to the symbol demapping unit, and outputs the estimated value of the distributed check code block to the transfer channel decoding unit. The transfer channel decoding unit combines the estimated values of the distributed check code block, combines the estimated values with the estimated values of the information code blocks output by the broadcast channel decoding unit and performs the channel decoding process to obtain the information code block corresponding to the whole node group composed of each source node.

Hereinafter, with reference to the implementation model of the cooperative transfer system shown in Figure 10, the specific working process of the above-mentioned embodiment is illustrated in detail:

Assume that a user station 1, a user station 2 and a user station 3 may all act as the source nodes, and the user station 1, the user station 2 and the user station 3 compose the cooperative node group. The user station 2 and the user station 3 may also act as transfer nodes of the user station 1, and the user station 2 and the user station 3 compose the cooperative transfer node group. The cooperative node group and the destination node (the base station shown in Figure 10) compose the cooperative transfer system. The communication target of the cooperative node group composed of each source node is the destination node.

Assume that the cooperative node group adopts a (7, 3) linear block code.

The distributed input information code blocks of the user station 1, the user station 2 and the user station 3 are respectively:

$$U_1 = u_0, \quad U_2 = u_1, \quad U_3 = u_2.$$

At the broadcasting stage, the user station 1, the user station 2 and the user station 3 respectively act as the source nodes to broadcast corresponding distributed information code blocks U1, U2, and U3 to the transfer nodes (the user station 2 and the user station 3) in the cooperative transfer node group and the destination node.

At the transferring stage, the user station 2 and the user station 3 combine the received distributed information code blocks with its information code blocks into the following information code block:

$$U = \begin{bmatrix} u_0 & u_1 & u_2 \end{bmatrix}$$

The user station 2 and the user station 3 perform the distributed linear block coding process on the information code block U according to the following equation.

$$P_i = U \cdot Q_i$$

$Q_i$(i=1,2) is the distributed check code element partial matrix of the cooperative transfer node (i.e., the user station 2 and the user station 3). Q1 (i.e., the distributed check code element partial matrix of the user station 2) is composed of code elements in the first and second columns of the check code element partial matrix $Q$ of the generated matrix G. Q2 (i.e., the distributed check code element partial matrix of the user station 3) is composed of code elements in the third and fourth columns of the check code element partial matrix $Q$ of the generated matrix G.

The distributed check code blocks output after being coded are:

$$P_1 = \begin{bmatrix} p_0 & p_1 \end{bmatrix}, \quad P_2 = \begin{bmatrix} p_2 & p_3 \end{bmatrix}$$

wherein,

$$\begin{cases} p_0 = u_0 \oplus u_2 \\ p_1 = u_0 \oplus u_1 \oplus u_2 \\ p_2 = u_0 \oplus u_1 \\ p_3 = u_1 \oplus u_2 \end{cases},$$

The distributed check code blocks are transmitted to the destination node after being processed by the symbol mapping unit and the demodulator.

The base station performs the decoding process according to the distributed information code block received at the broadcasting stage and the distributed check code block received at the transferring stage. The detailed process is given below:

At the broadcasting stage, the base station demodulates the received distributed information code block broadcasted by each source node in the cooperative node group through the demodulator and transmits the processed distributed information code block to the symbol demapping unit. The symbol demapping unit merely performs the symbol demapping process on the distributed information code block output to the broadcast channel decoding unit and transmits it to the broadcast channel decoding unit. The broadcast channel decoding unit combines the processed distributed information code block after receiving it, performs the channel decoding process on the combined information code block, outputs the estimated value of the information code block, and transmits it to the transfer channel decoding unit.

At the transferring stage, the demodulator demodulates the received distributed check code block transferred by each transfer node in the cooperative transfer node group, transmits the processed distributed check code block to the symbol demapping unit, and outputs the estimated value of the distributed check code block to the transfer channel decoding unit.

The transfer channel decoding unit combines the estimated value of the distributed check code block, combines the estimated value with the estimated value of the information code block output by the broadcast channel decoding unit, and performs the channel decoding process based on a pre-acquired monitor matrix H to obtain the information code block.

For example, assume that the monitor matrix H pre-acquired by the destination node is:

$$H = \begin{bmatrix} 1 & 0 & 1 & \vdots & 1 & 0 & 0 & 0 \\ 1 & 1 & 1 & \vdots & 0 & 1 & 0 & 0 \\ 1 & 1 & 0 & \vdots & 0 & 0 & 1 & 0 \\ 1 & 1 & 1 & \vdots & 0 & 0 & 0 & 1 \end{bmatrix}.$$

The base station performs the linear block decoding process on the received information code block according to the acquired monitor matrix H so as to obtain the information code block $U=[u_0 \; u_1 \; u_2]$ of the cooperative node group.

As for the system of the embodiment of the present invention, a second embodiment of the present invention is provided, which is different from the first embodiment in that the distributed linear block coding unit shown in Figure 8 is replaced with the linear block coding unit. Information processing procedures of the linear block coding unit are given as below:

After combining the received distributed information code block with its distributed information code block, the linear block coding unit performs the linear block coding process so as to obtain the check code block corresponding to the whole group composed of each source node, and transmits it the destination node after successively performing the corresponding symbol mapping process and the corresponding modulating process on the part of the distributed check code block corresponding to the linear block coding unit.

The cooperative transfer system shown in Figure 10 is still taken as the example to illustrate the information processing procedures of the linear block coding unit:

Assume that the cooperative node group adopts the (7, 3) linear block code.

The distributed input information code blocks of the user station 1, the user station 2 and the user station 3 are respectively:

$$U_1 = u_0, \quad U_2 = u_1, \quad U_3 = u_2.$$

At the broadcasting stage, the user station 1, the user station 2 and the user station 3 respectively act as the source node to broadcast the corresponding distributed information code blocks U1, U2, and U3 to the transfer nodes (the user station 2 and the user station 3) in the cooperative transfer node group and the destination node.

At the transferring stage, the user station 2 and the user station 3 combine the received distributed information code blocks with its information code blocks of the user stations 2 and 3 into the following information code block:

$$U = \begin{bmatrix} u_0 & u_1 & u_2 \end{bmatrix}$$

The user station 2 and the user station 3 perform the linear block coding process respectively on the information code block U according to the following equation:

$P = U \cdot Q$ In the equation, $Q$ is the check code element partial matrix of the transfer node (the user station 2 or the user station 3):

$$Q = \begin{bmatrix} 1 & 1 & 1 & 0 \\ 0 & 1 & 1 & 1 \\ 1 & 1 & 0 & 1 \end{bmatrix}.$$

A corresponding check code block P is obtained according to the above equation. The user station 2 and the user station 3 merely transfer the distributed check code block Pi (i=1, ..., and M; M≤N) in the check code block P corresponding to the user stations 2 and 3 to the destination node.

The distributed check code blocks output by the user station 2 and the user station 3 are respectively:

$$P_1 = \begin{bmatrix} p_0 & p_1 \end{bmatrix}, \quad P_2 = \begin{bmatrix} p_2 & p_3 \end{bmatrix}$$

wherein,

$$\begin{cases} p_0 = u_0 \oplus u_2 \\ p_1 = u_0 \oplus u_1 \oplus u_2 \\ p_2 = u_0 \oplus u_1 \\ p_3 = u_1 \oplus u_2 \end{cases}.$$

The corresponding symbol mapping process and modulating process are performed on $P_1$ and $P_2$ in turn and the processed $P_1$ and $P_2$ are transmitted to the destination node.

As for the method of the embodiment of the present invention, the embodiment of the present invention provides a third embodiment as shown in Figure 11:

Block 101: Each node acting as the source node in the cooperative node group transmits the distributed information code block to each node acting as the transfer node in the cooperative node group and the destination node.

Each node in the cooperative node group may act as the source node. When one node in the cooperative node group acts as the source node, other nodes or part of other nodes in the cooperative node group may act as the transfer nodes of the source node and compose the cooperative transfer node group. At the broadcasting stage, each node acting as the source node j (j=1, ..., and N) broadcasts the distributed information code block Uj (j=1, ..., and N) to each transfer node in the cooperative transfer node group and the destination node. Therefore, the input information code block of a node group composed of each source node is:

$$U = \begin{bmatrix} U_1 & U_2 & \cdots & U_N \end{bmatrix},$$

In the above code block, a total code element bit number in U is k. A linear packet code block C having the total code element bit number of n may be formed according to U based on the following equation:

$C=U \cdot G$ In the equation, G is a k×n generated matrix and includes two parts: $G = \begin{bmatrix} M & \vdots & Q \end{bmatrix}$. M is the information code element matrix in the generated matrix G and Q is a k×(n-k) check code element matrix in the generated matrix G.

After each node acting as the source node in the cooperative node group transmits the information code block to the destination node, the destination node obtains the linear packet code block C composed of each source node.

Block 102: Each transfer node in the cooperative node group receives the distributed information code block transmitted by each source node in the group, combines it with the distributed information code block of each transfer node, performs the distributed linear block coding process, obtains the corresponding distributed check code block, and transmits it to the destination node.

At the transferring stage, each transfer node i (i=1, ..., M; M≤N) in the cooperative transfer node group combines the received information code block transmitted by each source node with the information code block of each transfer node so as to form the input information code block of the group composed of each source node:

$$U = \begin{bmatrix} U_1 & U_2 & \cdots & U_N \end{bmatrix}.$$

A distributed linear block coding process is performed on U based on the following equation:

$$P_i = U \cdot Q_i.$$

Qi is a distributed k×Ti check code element partial matrix of the transfer node i (i=1, ..., and M; M≤N). Qi is composed of Ti columns code elements from column (T1+T2+...+Ti-1+1) to column (T1+T2+...+Ti) of the check code element partial matrix Q in the generated matrix G and T0=0.

The distributed check code block Pi (i=1, ..., and M; M≤N) corresponding to each transfer node is obtained based on the above equation. The code element bit number of Pi is Ti and n-k = T1+T2+...+TM.

The distributed check code block Pi is transferred to the destination node. Therefore, the destination node may obtain the check code block corresponding to the whole group composed of each source node:

$$P = \begin{bmatrix} P_1 & P_2 & \cdots & P_M \end{bmatrix}.$$

In order to decrease communication traffic at the transferring stage, a low-density parity check code (LDPC) may be selected for the distributed channel coding process.

Block 103: The destination node combines the received distributed check code block transmitted by each transfer node, combines the distributed information code block transmitted by each source node during the broadcasting stage and forms the linear packet code block based on the combined check code block and information code block. The destination node decodes the linear packet code block according to the monitor matrix corresponding to the cooperative node group composed of each transfer node.

Before this step, the destination node needs to acquire the monitor matrix corresponding to the cooperative transfer node group composed of each transfer node. The specified acquiring method may be realized through an agreement with the cooperative transfer node group via an initialization process or through the information exchanged with the cooperative transfer node group.

When it is required to support the dynamic self-adaptive linear block coding, each transfer node transmits its corresponding monitor matrix to the destination node. The destination node combines the received monitor matrix corresponding to each transfer node, and acquires the monitor matrix corresponding to the whole group composed of each transfer node.

Assume that the distributed $Ti \times n$ monitor matrix corresponding to each transfer node i (i=1, ..., and M; M≤N) is Hi, which is composed of Ti columns of code elements from column (T1+T2+...+Ti-1+1) to column (T1+T2+...+Ti) of the monitor matrix H. The destination node combines the monitor matrix Hi corresponding to each transfer node after receiving it so as to generate the monitor matrix H corresponding to the whole group composed of each transfer node.

When the check code element partial matrix in the monitor matrix is the unit matrix, each transfer node transmits the corresponding system code element partial matrix to the destination node. The destination node combines the system code element partial matrix and constructs the monitor matrix corresponding to the whole group composed of each transfer node according to the combined system code element partial matrix.

Assume that the distributed $Ti \times k$ system code element partial matrix of each transfer node i (i=1, ..., and M; M≤N) is Si, which is composed of Ti columns code elements from column (T1+T2+...+Ti-1+1) to column (T1+T2+...+Ti) of the system code element partial matrix S of the monitor matrix H. The destination node combines the distributed $Ti \times k$ system code element partial matrix Si corresponding to each transfer node after receiving it so as to generate the system code element partial matrix S corresponding to the whole group composed of each transfer node. The destination node constructs the monitor matrix H corresponding to the whole group composed of each transfer node according to the combined system code element partial matrix S. The destination node decodes the obtained linear packet code block C and check code block P according to the monitor matrix H so as to obtain the information code block U corresponding to the whole group composed of each source node after the error detection or the error correction.

Hereinafter, based on the OFDM subchannel technology, the time division technology and the code division technology, the detailed implementation processes of Block 101 and Block 102 in the third embodiment are illustrated:

When the OFDM subchannel technology is adopted, the detailed implementation processes of Step 101 and Step 102 in the third embodiment are given below.

As shown in Figure 12, assume that the OFDM channel is divided into orthogonal OFDM subchannels 1...N according to different OFDM sub-carrier clusters i (i=1, ..., and N).

In Block 101, at the broadcasting stage, according to different OFDM sub-carrier clusters, the OFDM subchannel j (j=1, ..., and N) is assigned to the broadcast channel from each source node j in the cooperative node group to each transfer node in this group, and the destination node. Each source node j (j=1, ..., and N) in the cooperative node group respectively broadcasts the distributed information code block Uj (j=1, ..., and N) to each transfer node in the cooperative node group and the destination node through different OFDM subchannels.

In Block 102, at the transferring stage, according to different OFDM sub-carrier clusters, the OFDM subchannel i (i=1, ..., and M) is assigned to the transfer channel from each transfer node i in the cooperative node group to the destination node. Each transfer node i (i=1, ..., and M; M≤N) in the cooperative node group receives the distributed information code block transmitted by each source node in this group, combines the distributed information code block with the distributed information code block of the transfer node, performs the distributed linear block coding process so as to obtain a corresponding check code block Pi (i=1,..., and M; M≤N), and transmits it to the destination node through the assigned transfer channels.

When the time division technology is adopted, the detailed implementation processes of Block 101 and Block 102 in the third embodiment are given below:

As shown in Figure 13, assume that the communication channel is divided into an orthogonal time division subchannels 1...N according to different timeslots i (i=1, ..., and N).

In Block 101, at the broadcasting stage, according to different timeslots i (i=1, ..., and N), a time division subchannel j (j=1, ..., and N) is assigned to the broadcast channel from each source node j in the cooperative node group to each transfer node in this group and the destination node. Each source node j (j=1, ..., and N) in the cooperative node group broadcasts the distributed information code block Uj (j=1, ..., and N) to each transfer node in the cooperative node group and the destination node through different time division subchannels.

In Block 102, at the transferring stage, a time division subchannel i (i=1, ..., and M) is assigned to the transfer channel from each transfer node i (i=1, ..., and M; M≤N) in the cooperative node group to the destination node. Each transfer node i (i=1, ..., and M; M≤N) in the cooperative node group receives the distributed information code block transmitted by each source node in this group, combines the distributed information code block with the distributed information code block of the transfer node, performs the distributed linear block coding process so as to obtain a corresponding check code block Pi (i=1,..., and M; M≤N), and transmits it to the destination node through the assigned transfer channels.

When the code division technology is adopted, the detailed implementation processes of Block 101 and Block 102 in the third embodiment are given below.

As shown in Figure 14, assume that the communication channel is divided into an orthogonal spread spectrum subchannels 1...N according to different spreading codes i (i=1, ..., and N).

In Block 101, at the broadcasting stage, according to different spreading codes, a spreading code j (j=1, ..., and N) is assigned to the broadcast channel from each source node j in the cooperative node group to each transfer node in this group and the destination node. Each source node j (j=1, ..., and N) in the cooperative node group broadcasts the distributed information code block Uj (j=1, ..., and N) to each transfer node in the cooperative node group and the destination node through different spreading codes.

In Block 102, at the transferring stage, a spreading code i (i=1, ..., and M) is assigned to the transfer channel from each transfer node i in the cooperative node group to the destination node. Each transfer node i (i=1, ..., and M; M≤N) in the cooperative node group receives the distributed information code block transmitted by each source node in this group, combines the distributed information code block with the distributed information code block of the transfer node, performs the distributed linear block coding process so as to obtain a corresponding check code block Pi (i=1,..., and M; M≤N), and transmits it to the destination node through the assigned transfer channels.

As for the method of the embodiment of the present invention, the embodiment of the present invention provides a fourth embodiment, which is different from the third embodiment in Block 102. The detailed implementation procedures of Block 102 in the fourth embodiment are given below:

Each transfer node in the cooperative node group receives the distributed information code block transmitted by each source node in this group, combines the distributed information code block with its distributed information code block, performs the linear block coding to obtain the check code block corresponding to the whole group composed of each source node, and transmits the corresponding distributed check code block of the transfer node itself to the destination node.

At the transferring stage, each transfer node i (i=1, ..., and M; M≤N) in the cooperative transfer node group combines the received distributed information code block transmitted by the source node with its distributed information code block so as to form the input information code block of the group composed of each source node:

$$U = \begin{bmatrix} U_1 & U_2 & \cdots & U_N \end{bmatrix}.$$

The linear block coding process is performed according to the following equation:

$$P_i = U \cdot Q.$$

Q is a distributed k×Ti check code element partial matrix of the transfer node i (i=1,...,M; M≤N). Q is composed of the check code element partial matrix Q of the generated matrix G.

Each transfer node transfers the distributed check code block Pi (i=1, ..., and M; M≤N) responding to itself to the destination node. The code element bit number of Pi is Ti, and n-k = T1+T2+...+TM.

The destination node may obtain the check code block corresponding to the whole group composed of each source node according to Pi transmitted by the source node:

$$P = \begin{bmatrix} P_1 & P_2 & \cdots & P_M \end{bmatrix}.$$

In the third embodiment of the present invention, when the transfer node merely has a transferring function but may not act as the source node, the implementation process of Block 102 is given below:

Each transfer node in the cooperative node group combines the distributed information code block transmitted by each source node in this group after receiving it, performs the corresponding distributed linear block coding to obtain the distributed check code block, and transmits it to the destination node.

In the fourth embodiment of the present invention, when the transfer node merely has the transferring function but may not act as the source node, the implementation process of Block 102 is given below.

Each transfer node in the cooperative node group combines the distributed information code block transmitted by each source node in this group after receiving it, performs the corresponding linear block coding to obtain the check code block corresponding to the whole group composed of each source node, and transmits the distributed check code block corresponding to the transfer node itself to the destination node

Though illustration and description of the present disclosure have been given with reference to illustrative embodiments thereof, it should be appreciated by persons of ordinary skill in the art that various changes in forms and details can be made without deviation from the principle and scope of this disclosure, which are defined by the appended claims.

**Claims**

1. An error control method, comprising:

   coding, by each node acting as a transfer node in a cooperative node group, an acquired distributed information code block to obtain a corresponding distributed check code block, and transmitting the corresponding distributed check code block to a destination node;
   combining, by the destination node, a received distributed check code block to generate a check code block, combining the distributed information code block transmitted by each node acting as a source node in the cooperative node group to generate an information code block; and
   decoding, by the destination node, the check code block and the information code block.

2. The method according to claim 1, wherein the coding to obtain the corresponding distributed check code block and transmitting the corresponding distributed check code block to the destination node comprises:

   acquiring, by each node acting as the transfer node in the cooperative node group, the distributed information code block transmitted by each node acting as the source node in the cooperative node group; or acquiring the distributed information code block transmitted by each node acting as the source node in the cooperative node group and the distributed information code block of each node acting as the transfer node in the cooperative node group; and
   combining, by each node acting as the transfer node in the cooperative node group, the acquired distributed information code block, performing a corresponding distributed linear block encoding on the obtained information code block after the combination to obtain the corresponding distributed check code block and transmitting the corresponding distributed check code block to the destination node; or performing a corresponding linear block coding on the obtained information code block after the combination to obtain a check code block corresponding to a whole group composed of each source node, acquiring the distributed check code block corresponding to each node acting as the transfer node in the cooperative node group, and transmitting the distributed check code block to the destination node.

3. The method according to claim 1 or 2, before the coding to obtain the corresponding distributed check code block and transmitting the corresponding distributed check code block to the destination node, comprising:

   transmitting, by each node acting as the source node in the cooperative node group, the distributed information code block thereof to each node acting as the transfer node in the cooperative node group thereof and the destination node.

4. The method according to claim 3, wherein the transmitting the distributed information code block specifically comprises:

assigning an orthogonal frequency division multiplexing (OFDM) subchannel to a broadcast channel from the node acting as the source node in the cooperative node group to a cooperative transfer node group composed of each node acting as a transfer node in the cooperative node group thereof, and the destination node according to different OFDM sub-carrier clusters when an OFDM subchannel technology is employed; and broadcasting, by each node acting as the source node in the cooperative node group, the distributed information code block thereof to each node acting as the transfer node and the destination node through different OFDM subchannels; assigning a time division subchannel to a broadcast channel from the node acting as the source node in the cooperative node group to a cooperative transfer node group composed of each node acting as the transfer node in the cooperative node group thereof, and the destination node according to different timeslots when a time division technology is employed; and broadcasting, by each node acting as the source node in the cooperative node group, the distributed information code block thereof to each node acting as the transfer node and the destination node through different time division subchannels; or assigning a spread spectrum code to a broadcast channel from the node acting as the source node in the cooperative node group to a cooperative transfer node group composed of each node acting as the transfer node in the cooperative node group thereof, and the destination node according to different spreading codes when a code division technology is employed; and broadcasting, by each node acting as the source node in the cooperative node group, the distributed information code block thereof to each node acting as the transfer node and the destination node through different spread spectrum codes.

5. The method according to claim 1, before the coding to obtain the corresponding distributed check code block and transmitting the corresponding distributed check code block to the destination node, further comprising:

assigning an OFDM subchannel to a transfer channel from each node acting as the transfer node in the cooperative node group to the destination node according to different OFDM sub-carrier clusters; or assigning a time division subchannel to a transfer channel from each node acting as the transfer node in the cooperative node group to the destination node; or assigning a spread spectrum code to a transfer channel from each node acting as the transfer node in the cooperative node group to the destination node.

6. The method according to claim 1, further comprising:

acquiring, by the destination node, a monitor matrix corresponding to a cooperative transfer node group composed of each node acting as the transfer node in the cooperative node group.

7. The method according to claim 6, when it is required to support dynamic self-adaptive linear block coding, further comprising:

transmitting, by each node acting as the transfer node in the cooperative node group, a distributed monitor matrix corresponding to each node acting as the transfer node in the cooperative node group to the destination node; and combining, by the destination node, each received distributed monitor matrix to acquire the monitor matrix corresponding to the cooperative transfer node group composed of each node acting as the transfer node; or transmitting, by each node acting as the transfer node in the cooperative node group, a distributed system code element partial matrix corresponding to each node acting as the transfer node in the cooperative node group to the destination node when a check code element partial matrix in the monitor matrix corresponding to the cooperative transfer node group composed of each node acting as the transfer node in the cooperative node group is a unit matrix; and combining, by the destination node, the distributed system code element partial matrix and constructing the monitor matrix corresponding to the cooperative transfer node group according to an obtained system code element partial matrix after the combination.

8. The method according to claim 1, 6, or 7, wherein performing the decoding by the destination node comprises:

combining, by the destination node, the received distributed check code block transmitted by each node acting as the transfer node, combining the distributed information code block transmitted by each node acting as the source node in the cooperative node group and forming a linear packet code block according to the obtained check code block and information code block after the combination; and

decoding the linear packet code block according to the monitor matrix corresponding to the cooperative transfer node group composed of each node acting as the transfer node.

9. A cooperative transfer system for error control, comprising a cooperative node group and a destination node; wherein the cooperative node group is adapted to code a distributed information code block acquired by each code acting as a transfer node in the cooperative node group to obtain a corresponding distributed check code block, and transmit the corresponding distributed check code block to the destination node; and the destination node is adapted to combine the received distributed check code block, combine the distributed information code block transmitted by each node acting as a source node in the cooperative node group and decode a generated check code block and a generated information code block after a combination.

10. The system according to claim 9, wherein the transfer node in the cooperative node group comprises a receiver and a transmitter; wherein
the receiver is adapted to perform a channel decoding process on a received distributed information code block transmitted by each source node after successively performing a demodulating process and a symbol demapping process on the received distributed information code block and transmit a processed distributed information code block to the transmitter; and
the transmitter is adapted to acquire the distributed information code block transmitted by the source node or acquire the distributed information code block transmitted by the source node and the distributed information code block of the transmitter, perform a distributed linear block coding process after combining the obtained distributed information code block, and send out a processed distributed check code block after successively performing the corresponding symbol mapping process and a modulating process on an obtained corresponding distributed check code block; or perform a linear block coding process on an obtained information code block after the combination to obtain the corresponding check code block and send out a processed distributed check block after successively performing the corresponding symbol mapping process and the modulating process on the distributed check code block corresponding to the transmitter.

11. The system according to claim 10, wherein the receiver comprises a demodulator, a symbol demapping unit and a channel decoding unit; wherein
the demodulator is adapted to demodulate the received distributed information code block and transmit the demodulated distributed information code block to the symbol demapping unit; and the symbol demapping unit is adapted to perform the symbol demapping process on the received distributed information code block and transmit a demapped distributed information code block to the channel decoding unit to perform the channel decoding process.

12. The system according to claim 10, wherein the transmitter comprises:

a distributed linear block coding unit adapted to combine the received distributed information code block transmitted by each source node or combine the received distributed information code block transmitted by each source node with the distributed information code block of the transmitter, perform the distributed linear block coding process on the obtained information code block after the combination to obtain the corresponding distributed check code block and send out the distributed check code block; or
a linear block coding unit adapted to combine the received distributed information code block transmitted by each source node or combine the received distributed information code block transmitted by each source node with the distributed information code block of the transmitter, perform the distributed linear block coding process on the obtained information code block after the combination to obtain the corresponding check code block and send out the check code block corresponding to the transmitter.

13. The system according to claim 12, wherein the transmitter further comprises a symbol mapping unit and a modulator; wherein
the symbol mapping unit is adapted to perform the corresponding symbol mapping process on the distributed check code block transmitted by the distributed linear block coding unit or the linear block coding unit, transmit a mapped distributed check code block to the modulator and send out after a corresponding modulating process.

14. The system according to claim 9, wherein the destination node comprises a broadcast channel decoding unit and a transfer channel decoding unit; wherein
the broadcast channel decoding unit is adapted to perform a channel decoding process on the distributed information code block broadcasted by each cooperative node and received by the destination node at a broadcasting stage, combine a decoded distributed information code block, output an estimated value of the information code block and transmit the estimated value of the information code block to the transfer channel decoding unit; and

the transfer channel decoding unit is adapted to combine the distributed check code block transmitted by each transfer node in the cooperative node group and received by the destination node at the transferring stage and decode an obtained check code block after the combination and the estimated value of the received information code block.

15. The system according to claim 14, wherein the destination node further comprises a demodulator and a symbol demapping unit; wherein

the demodulator is adapted to demodulate the distributed information code block broadcasted by each node in the cooperative node group and received by the destination node at the broadcasting stage and/or the distributed check code block transmitted by each transfer node in the cooperative node group and received by the destination node at the transferring stage; and the symbol demapping unit is adapted perform the corresponding symbol demapping process on the processed distributed information code block and/or distributed check code block, transmit the distributed information code element to the broadcast channel decoding unit and transmit the distributed check code element to the transfer channel decoding unit.

16. The system according to claim 11 or 15, wherein the demodulator comprises an orthogonal frequency division multiplexing (OFDM) demodulator.

17. The system according to claim 13, wherein the modulator comprises an OFDM modulator.

User station 1

U$_1$     U$_1$

Tansfer
station

U$_1$

U$_2$

Base station

U$_2$     U$_2$

User station 2

**FIG. 1**

Receiving
antenna

| OFDM
receiver | | OFDM
transmitter |

Transmitting
antenna

**FIG. 2**

To the
OFDM
transmitter

| Channel
decoding unit | Symbol
demapping unit | OFDM
demodulator |

Antenna

**FIG. 3**

EP 1 976 166 A1

**FIG. 4**

**FIG. 5**

Cooperative node group

**FIG. 6**

Cooperative transfer
node group

Node 2

Node 3

Node 4

Source
node

Destination
node

**FIG. 7**

From
OFDM
receiver → Distributed
linear block
coding unit → Symbol
mapping unit → OFDM modulator → Antenna

**FIG. 8**

Broadcast
channel
decoding
unit

Symbol
demapping
unit

OFDM
demodulator

Antenna

Transfer
channel
decoding
unit

Signal

**FIG. 9**

User
station 1

$U_1$

$U_3$
User
station 3

$P_1$

Base
station

$P_2$

$U_2$

User
station 2

## FIG. 10

Each node acting as the source node in the cooperative node group transmits the distributed information code block to each node acting as the transfer node in the cooperative node group and the destination node

101

After each transfer node in the cooperative node group receives the distributed information code block transmitted by each source node in the group, combines it with the distributed information code block which is transmitted to itself, processes the distributed linear block encoding, obtains corresponding distributed check code block and transmits it to the destination node

102

The destination node combines the received distributed check code block transmitted by each transfer node, and combines the distributed information code block transmitted by each source node during broadcasting stage, then forms a linear block code block based on the combined check code block and information code block, finally, the destination node decodes the linear block code block based on the monitor matrix corresponding to the cooperative transfer node group composed of each relay node

103

## FIG. 11

OFDM
subchannel logic
number

| | Source node 1 transmits an information sequence $U_1$ | Transfer node 1 transmits a check code block $P_1$ |
|---|---|---|
| 1 | | |
| 2 | Source node 2 transmits an information sequence $U_2$ | $\vdots$ |
| $\vdots$ | | |
| M | $\vdots$ | Transfer node M transmits a check code block $P_M$ |
| $\vdots$ | | |
| N | Source node N transmits an information sequence $U_N$ | |

Broadcasting stage    Transferring stage    Time

**FIG. 12**

Frequency

| | 1 | ... | N | 1 | ... | M |
|---|---|---|---|---|---|---|
| | Source node 1 transmits an information sequence $U_1$ | ... | Source node N tranmits an information sequence $U_N$ | Transfer node 1 transmits a check code block $P_1$ | ... | Transfer node M tranmits a check code block $P_M$ |

Broadcasting stage    Transferring stage

Time
Time division subchannel logic number

**FIG. 13**

Spreading code logic number

| | |
|---|---|
| Source node 1 tranmits an information sequence $U_1$ | Transfer node 1 transmits a check code block $P_1$ |
| Source node 2 transmits an information sequence $U_2$ | $\vdots$ |
| $\vdots$ | Transfer node M transmits a check code block $P_M$ |
| Source node N transmits an information sequence $U_N$ | |

1

2
·
·
·
M
·
·
·
N

Broadcasting stage | Transferring stage

Time

**FIG. 14**

<table>
<tr><td>**INTERNATIONAL SEARCH REPORT**</td><td>International application No.<br>PCT/CN2006/002408</td></tr>
</table>

**A. CLASSIFICATION OF SUBJECT MATTER**

H04J11/00(2007.01)i

According to International Patent Classification (IPC) or to both national classification and IPC

**B. FIELDS SEARCHED**

Minimum documentation searched (classification system followed by classification symbols)

IPC: H04J  H04B  H04Q  H04L

Documentation searched other than minimum documentation to the extent that such documents are included in the fields searched

Electronic data base consulted during the international search (name of data base and, where practicable, search terms used)

CNPAT,CNKI,EPODOC,WPI,PAJ: node/nodes,relay+/transfer+,source,goal/object/target/destination,BS/base

**C. DOCUMENTS CONSIDERED TO BE RELEVANT**

| Category* | Citation of document, with indication, where appropriate, of the relevant passages | Relevant to claim No. |
|---|---|---|
| X | US2005141593A1 (NOKIA CORP) 30.Jun.2005 (30.06.2005)<br>See the description[0022]-[0037],figures 3-7 | 1,3-5,9 |
| A | | 2,6-8,10-17 |
| A | CN1622658A (KONINK PHILIPS ELECTRONICS NV) 01.Jun.2005<br>(01.06.2005) See the whole document | 1-17 |
| A | CN1124549A (TELECOM FINLAND OY et al) 12.Jun.1996 (12.06.1996) See the whole document | 1-17 |

☐ Further documents are listed in the continuation of Box C.        ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
|---|---|
| 16.Jan.2007(16.01.2007) | 0 1 · FEB 2007 (0 1 · 0 2 · 2 0 0 7) |
| Name and mailing address of the ISA/CN<br>The State Intellectual Property Office, the P.R.China<br>6 Xitucheng Rd., Jimen Bridge, Haidian District, Beijing, China<br>100088<br>Facsimile No. 86-10-62019451 | Authorized officer<br>CHEN Junru<br>Telephone No. (86-10)62084025 |

## INTERNATIONAL SEARCH REPORT
Information on patent family members

| | International application No. |
|---|---|
| | PCT/CN2006/002408 |

| Patent Documents referred in the Report | Publication Date | Patent Family | Publication Date |
|---|---|---|---|
| US2005141593A1 | 30.06.2005 | WO2005067225A1 | 21.07.2005 |
| | | GB2426895A | 06.12.2006 |
| | | DE112004002570T | 28.12.2006 |
| CN1622658A | 01.06.2005 | WO2005053338A1 | 09.06.2005 |
| CN1124549A | 12.06.1996 | WO9428641A1 | 08.12.1994 |
| | | FI932433A | 28.11.1994 |
| | | AU6797894A | 20.12.1994 |
| | | NO954732A | 23.11.1995 |
| | | EP0705502A1 | 10.04.1996 |
| | | JP8510605T | 05.11.1996 |
| | | HU73124A | 28.06.1996 |
| | | HU215895B | 29.03.1999 |
| | | FI108382B | 15.01.2002 |
| | | LV11509B | 20.12.1996 |
| | | EE3327B | 15.12.2000 |

Form PCT/ISA /210 (patent family annex) (April 2005)